# FASCICULE DE BREVET EUROPEEN

(11) **EP 2 935 132 B1**
(45) Date de publication et mention de la délivrance du brevet: **01.03.2017**
(21) Numéro de dépôt: 13815058.6
(22) Date de dépôt: 05.12.2013
(51) Int. Cl.: C03B 5/235, C03B 5/237, F23L 15/04, F25J 3/04, F27D 17/00, F23L 7/00, F02C 1/05, F27B 3/10, F27B 17/00, F27D 19/00

(54) **RECUPERATION ENERGETIQUE DES FUMEES D'UN FOUR DE FUSION AVEC UNE TURBINE À GAZ ET DES ÉCHANGEURS DE CHALEUR**
ENERGIERÜCKGEWINNUNG AUS RAUCHGAS AUS EINEM SCHMELZOFEN MIT EINER GASTURBINE UND WÄRMETAUSCHERN
ENERGY RECOVERY FROM FUMES FROM A MELTING FURNACE WITH A GAS TURBINE AND HEAT EXCHANGERS

(30) Priorité: 20.12.2012 FR 1262375
(43) Date de publication de la demande: 28.10.2015
(73) Titulaire: L'Air Liquide Société Anonyme pour l'Etude et l'Exploitation des Procédés Georges Claude, 75007 Paris (FR)
(72) Inventeur: DAVIDIAN, Benoit, F-94100 Saint Maur des Fosses (FR); JOUMANI, Youssef, F-78121 Crespieres (FR); LE DIRACH, Jocelyn, F-78000 Versailles (FR); TRANIER, Jean-Pierre, F-94240 l'Hay-les-Roses (FR)
(74) Mandataire: De Vleeschauwer, Natalie Y.L.D.
(86) Numéro de dépôt international: PCT/FR2013/052956
(87) Numéro de publication internationale: WO 2014/096611

(56) Documents cités:
- US-A- 4 030 877
- US-A- 4 528 012
- US-A1- 2012 135 362

## Description

Dans un four de fusion, les matières premières sont transformées en matière fondue grâce à un apport d'énergie thermique qui est généralement au moins en partie fournie par de la combustion. La partie majeure de l'énergie thermique générée par la combustion est transférée à la charge (matières premières solide et matière fondue). Toutefois, de l'énergie résiduelle est évacuée du four avec les fumées de combustion.

Dans le cas d'un four de fusion en aéro-combustion, ou combustion à l'air, il est ainsi connu d'utiliser des échangeurs à contre-courant alterné composés de céramiques (régénérateurs) ou des échangeurs en acier (récupérateurs) pour préchauffer l'air de combustion en amont du four, de manière à augmenter non seulement le rendement de la combustion dans le four mais aussi celui de l'installation dans sa totalité dans la mesure où une partie de l'énergie thermique contenue dans les fumées évacuées est récupérée et utilisée comme énergie de préchauffage pour l'air de combustion.

Dans un four à verre à récupérateurs, l'air de combustion est préchauffé à 700°C tandis que les régénérateurs permettent d'atteindre des températures d'air de combustion de 1200°C voire 1250°C en début de vie de l'installation.

Les opérateurs des fours de fusion, et notamment les verriers, adoptent de plus en plus de l'oxy-combustion, technologie à la fois plus efficace (car éliminant le ballast thermique de l'azote), et moins polluante (réduction des NOx et du CO₂, ce même azote étant à l'origine des NOx formés).

Cependant, les systèmes de récupération d'énergie des fumées développés pour l'aéro-combustion (régénérateurs et récupérateurs) ne sont pas adaptés pour la récupération d'énergie thermique des fumées générées par l'oxy-combustion.

EP-A-1338848 décrit un système de récupération d'énergie des fumées d'un four à verre, et en particulier d'un four à verre en oxy-combustion. Ledit système comprend au moins un échangeur de chaleur pour le préchauffage d'un gaz riche en oxygène et/ou d'un combustible gazeux par échange thermique avec les fumées évacuées du four, une chaudière située en aval du au moins un échangeur de chaleur et apte à générer de la vapeur surchauffée par échange thermique avec les fumées et une turbine à vapeur pour l'expansion de la vapeur surchauffée avec production d'énergie mécanique.

Selon EP-A-1338848, l'énergie mécanique générée par la turbine peut être utilisée pour fournir au moins une partie des besoins énergétiques d'une installation de séparation des gaz de l'air qui fournit de l'oxygène de combustion pour le four à verre.

Pour la production de vapeur surchauffée dans la chaudière avec une efficacité industriellement acceptable, les fumées à l'entrée de la chaudière, et donc aussi à la sortie de l'échangeur de chaleur, doivent présenter une température d'au moins 1000°C, voire de 1200°C à 1500°C.

Malgré les bonnes résistances à de telles températures des matériaux identifiés dans EP-A-1338848, les verriers préfèrent utiliser des systèmes de récupération d'énergie à plus basse température estimés plus durables.

Un tel système alternatif particulièrement fiable pour la récupération d'énergie des fumées d'un four à verre à oxy-combustion est décrit dans EP-A-0872690.

Selon EP-A-0872690, les fumées issues du four à oxy-combustion sont utilisées pour le préchauffage indirect de l'oxygène et/ou du combustible en amont du four. Dans un premier échangeur de chaleur, les fumées issues du four chauffent un fluide intermédiaire, tel que par exemple de l'air, par échange thermique entre les deux fluides. Le fluide intermédiaire chauffé issu du premier échangeur est utilisé dans un deuxième échangeur thermique pour chauffer de l'oxygène de combustion et/ou le combustible.

Le système de récupération d'énergie des fumées selon EP-A-0872690 ne permet toutefois pas une récupération supplémentaire d'énergie des fumées sous forme de vapeur surchauffée, comme c'est le cas dans EP-A-1338848, du fait qu'en pratique les fumées à la sortie du premier échangeur présentent une température nettement inférieure à 1000°C.

Le document US 2012/135362A1 représente l'état de la technique le plus proche aux revendications 1 et 7 et décrit les caractéristiques des préambules de ces revendications.

La présente invention a pour objectif d'accroitre l'efficacité de récupération de chaleur sur les fumées d'un four de fusion utilisant un combustible gazeux et/ou de l'oxygène comme comburant et dans lequel de l'oxygène de combustion et/ou du combustible gazeux sont préchauffés par échange de chaleur indirecte avec les fumées évacuées du four.

La présente invention concerne plus particulièrement un procédé de fusion dans un four comportant une chambre de fusion. Selon ce procédé, on chauffe la chambre de fusion au moyen de combustion, générant ainsi de l'énergie thermique et des fumées chaudes dans la chambre de fusion. Les fumées chaudes sont évacuées de la chambre de fusion et on chauffe de l'air, utilisé comme gaz caloporteur, par échange thermique avec au moins une partie des fumées chaudes évacuées de la chambre de fusion, avec obtention d'air chaud. On préchauffe au moins un réactif choisi parmi de l'oxygène et/ou du combustible gazeux par échange thermique avec l'air chaud, avec obtention d'au moins un réactif préchauffé et de l'air tempéré et on utilise le au moins un réactif préchauffé comme réactif de combustion pour le chauffage de la chambre de fusion. Suivant l'invention, on comprime l'air tempéré, obtenu après le préchauffage du au moins un réactif, dans un compresseur d'air de manière à obtenir de l'air tempéré comprimé. Cet air tempéré comprimé est ensuite chauffé par échange thermique avec des fumées chaudes générées par la combustion dans la chambre de fusion de manière à obtenir de l'air comprimé chauffé avec lequel on génère de l'énergie mécanique et/ou électrique par expansion de cet air comprimé chauffé dans une turbine d'expansion.

On observe, suivant l'invention, une synergie significative entre, d'une part, le système de récupération d'énergie thermique des fumées issues de la chambre de fusion et, d'autre part, l'énergie récupérée par la turbine d'expansion. En effet, on constate un rendement global nettement au-dessus du rendement énergétique à prévoir pour une simple juxtaposition d'une turbine d'expansion et d'une installation de récupération d'énergie thermique par préchauffage de réactifs au moyen des fumées chaudes.

Il est à noter que la combustion n'est pas nécessairement le seul moyen de chauffage de la chambre de fusion et que le four peut être muni de moyens de combustion auxiliaires tels que des électrodes.

De manière avantageuse, on préchauffe en tant que réactif de combustion de l'oxygène par échange thermique avec l'air chaud. On peut également préchauffer du combustible gazeux en tant que réactif de combustion, seul ou, de préférence, en combinaison avec de l'oxygène.

L'oxygène préchauffé peut être le seul comburant utilisé pour la combustion dans la chambre de fusion. L'oxygène préchauffé peut également être utilisé en combinaison avec de l'air comme comburant, typiquement de l'air préchauffé.

Ainsi, le four de fusion peut être un four d'oxy-combustion (dont le seul comburant est de l'oxygène), un four de combustion enrichi (utilisant de l'air enrichi en oxygène comme comburant), ou encore un four à oxydant mixte (utilisant une combinaison de combustion avec de l'oxygène et une combinaison de combustion avec de l'air, cet air pouvant éventuellement être enrichi en oxygène).

Dans le présent contexte, le terme « oxygène » se réfère à un gaz ayant une teneur en O₂ d'au moins 75% vol, de préférence entre 80% vol et 100% vol, et encore de préférence entre 90% vol et 100% vol.

De manière analogue, le combustible gazeux préchauffé peut être le seul combustible utilisé pour la combustion dans la chambre de fusion ou le combustible gazeux préchauffé peut être utilisé en combinaison avec un autre combustible.

Le four est de préférence un four d'oxy-combustion.

Le gaz naturel est un combustible gazeux préféré.

Le préchauffage d'au moins un réactif de combustion par échange thermique avec l'air chaud est typiquement réalisé dans un échangeur de chaleur, dit échangeur de chaleur primaire.

Le chauffage de l'air, utilisé comme gaz caloporteur, est de manière analogue typiquement réalisé dans un deuxième échangeur de chaleur, dit échangeur de chaleur secondaire.

Suivant une première forme de réalisation, l'air tempéré comprimé est également chauffé dans l'échangeur de chaleur secondaire par échange thermique avec les fumées chaudes.

Suivant une forme de réalisation alternative, l'air tempéré comprimé est chauffé par échange thermique avec des fumées chaudes dans un troisième échangeur thermique, dit échangeur thermique tertiaire. L'échangeur secondaire et l'échangeur tertiaire peuvent fonctionner en série ou en parallèle. Dans le dernier cas, on divise les fumées chaudes en plusieurs fractions. Une première fraction est alors introduite dans l'échangeur secondaire pour le chauffage de l'air qui est utilisé comme gaz caloporteur. Une deuxième fraction est introduite dans l'échangeur tertiaire pour le chauffage de l'air tempéré comprimé en amont de la turbine d'expansion.

L'énergie mécanique et/ou électrique générée par la turbine d'expansion peut au moins en partie être fournie à un ou plusieurs compresseurs d'air. Le ou les compresseurs d'air sont notamment choisis parmi : un compresseur d'air qui comprime l'air tempéré, un compresseur d'air qui alimente une unité de séparation des gaz de l'air et un autre compresseur d'air tel que par exemple, un compresseur d'air qui fournit de l'air comprimé comme gaz caloporteur à l'échangeur de chaleur secondaire. En effet, non seulement l'installation de fusion est équipée d'un compresseur d'air souvent appelé soufflante, pour la compression d'air tempéré à l'échangeur secondaire, mais elle comporte généralement aussi un compresseur d'air pour la fourniture de l'air avant son utilisation comme gaz caloporteur.

L'installation peut également comprendre une unité de séparation des gaz de l'air et/ ou d'autres unités consommatrices d'air comprimé fourni par un compresseur d'air. L'installation peut notamment comprendre une unité de séparation des gaz de l'air qui fournit l'oxygène de combustion, des installations de refroidissement à air comprimé, etc.

La turbine d'expansion peut fournir entre 75% et 100%, de préférence 100% de la consommation énergétique du compresseur d'air qui alimente l'échangeur de chaleur secondaire en air comprimé.

De préférence, la turbine d'expansion fournit entre 25% et 100%, de préférence entre 50% et 100%, et en particulier 100% de la consommation énergétique du compresseur d'air qui alimente l'unité de séparation des gaz de l'air. Cette unité de séparation des gaz de l'air génère de préférence de l'oxygène utilisé comme réactif de combustion dans le procédé de fusion. L'unité de séparation des gaz de l'air peut notamment comporter une colonne à distillation cryogénique des gaz de l'air, mais d'autres types d'unités de séparation des gaz de l'air sont également envisageables.

Il est utile de prévoir un réservoir d'oxygène liquide comme source d'oxygène de combustion lors d'un arrêt ou d'une réduction de la production d'oxygène de combustion par l'unité de séparation des gaz de l'air. Un tel réservoir d'oxygène présente un volume de stockage permettant l'alimentation en oxygène de combustion à une capacité de la chambre de fusion pendant 6 à 8 heures lors d'un arrêt de l'unité de séparation des gaz de l'air. Il est également utile de prévoir une source auxiliaire d'énergie telle qu'un générateur, pour fournir de l'énergie mécanique et/ou de l'énergie électrique à utiliser lors d'un arrêt de la turbine d'expansion.

Les paramètres du procédé dépendent de la matière à fondre, telle que du verre, du métal, de l'émail, etc., de la taille et du type de la chambre de fusion, du débit de matière fondue, etc.

Les paramètres d'opération suivants ont été identifiés comme avantageux, seuls ou en combinaison, notamment, mais pas uniquement, quand le procédé est un procédé de fusion de verre :
- la température des fumées chaudes évacuées de la chambre de fusion est de 1000°C à 2000°C,
- la température de l'oxygène à la sortie de l'échangeur primaire (oxygène préchauffé) est de l'ordre de 250°C à 600°C,
- la température du combustible gazeux à la sortie de l'échangeur primaire (combustible préchauffé) est de l'ordre de 250°C à 550°C,
- la température de l'air chaud issu de l'échangeur secondaire est de 600°C à 800°C,
- la température de l'air comprimé chauffé issu, selon le cas, de l'échangeur secondaire ou tertiaire est de 600°C à 800°C,
- la température de l'air tempéré issu de l'échangeur primaire est de 150°C à 400°C.

La présente invention concerne également une installation de fusion adaptée pour la mise en oeuvre de l'une quelconque des formes de réalisation du procédé suivant l'invention.

Ainsi, l'invention concerne une installation de fusion qui comporte un four définissant une chambre de fusion chauffée par combustion. La chambre de fusion comporte au moins une sortie de fumées pour l'évacuation des fumées générées par cette combustion.

L'installation comporte également un échangeur de chaleur primaire pour le préchauffage, d'oxygène de combustion et/ou de combustible gazeux en amont de la chambre de fusion par échange thermique avec de l'air comme gaz caloporteur. Ledit échangeur primaire présente (a) une entrée de gaz caloporteur (chaud) et une sortie de gaz caloporteur (tempéré) et (b) une entrée d'oxygène de combustion (pour l'oxygène de combustion à préchauffer) et une sortie d'oxygène de combustion (pour l'oxygène de combustion préchauffé) et/ou une entrée de combustible gazeux (pour du combustible gazeux à préchauffer) et une sortie de combustible gazeux (pour le combustible gazeux préchauffé).

L'échangeur primaire présente de manière utile une entrée et une sortie d'oxygène de combustion et de préférence également une entrée et une sortie de combustible gazeux.

L'installation de fusion comporte aussi un échangeur de chaleur secondaire pour le chauffage d'air, qui est utilisé comme gaz caloporteur dans l'échangeur primaire, par échange thermique avec les fumées issues de la chambre de fusion. Ledit échangeur secondaire présente (a) une entrée d'air (pour le fluide caloporteur à chauffer) et une sortie d'air comprimé (pour l'air comprimé chauffé) et (b) une entrée de fumées (chaudes) et une sortie de fumées (tempérées).

L'entrée de fumées de l'échangeur secondaire est reliée à au moins une sortie de fumées de la chambre de fusion. La sortie d'oxygène de combustion de l'échangeur primaire est reliée à au moins un injecteur de comburant de la chambre de fusion. La sortie de comburant gazeux de l'échangeur primaire est reliée à au moins un injecteur de combustible de la chambre de fusion.

En règle générale, dans le présent contexte, le terme « relié » est utilisé au sens de « fluidiquement relié », par exemple au moyen d'une canalisation.

La sortie d'air (tempéré) de l'échangeur de chaleur primaire est reliée à une entrée d'air d'un compresseur d'air, dit premier compresseur d'air, le premier compresseur d'air a une sortie d'air comprimé qui est reliée à un échangeur de chaleur pour le chauffage d'air comprimé dans lequel l'air comprimé est chauffé par échange thermique avec des fumées générées par la combustion dans la chambre de fusion. L'échangeur de chaleur pour le chauffage de l'air comprimé a une sortie d'air comprimé chauffé qui est reliée à une entrée de gaz comprimé d'une turbine d'expansion pour la génération d'énergie mécanique et/ou électrique par l'expansion de l'air comprimé chauffé dans cette turbine d'expansion.

Suivant une forme de réalisation préférée de l'installation, la turbine d'expansion fournit de l'énergie mécanique et/ou électrique à au moins un compresseur d'air. La turbine d'expansion peut notamment fournir de l'énergie mécanique et/ou électrique à au moins un compresseur d'air choisi parmi : le premier compresseur d'air, un compresseur d'air qui alimente une unité de séparation des gaz de l'air et un autre compresseur d'air, tel qu'un compresseur d'air, dit « second compresseur » qui fournit de l'air comprimé à au moins une autre unité de l'installation consommatrice d'air comprimé. Le second compresseur peut ainsi être un compresseur d'air qui fournit de l'air comme gaz caloporteur à l'échangeur de chaleur secondaire.

Quand la turbine d'expansion fournit de l'énergie mécanique à au moins un compresseur d'air, ceci est avantageusement réalisé au moyen d'un arbre de transmission reliant la turbine à gaz audit compresseur d'air.

Quand l'installation suivant l'invention comporte une unité de séparation des gaz de l'air, celle-ci présente de préférence une sortie d'oxygène reliée à au moins un injecteur de comburant de la chambre de fusion pour la fourniture d'oxygène de combustion par l'unité de séparation audit au moins un oxy-brûleur. De manière préférée, la sortie d'oxygène de l'unité de séparation des gaz de l'air est, à cette fin, reliée à l'entrée d'oxygène de combustion de l'échangeur primaire. La sortie d'oxygène de l'unité de séparation des gaz de l'air est alors reliée à au moins un injecteur de comburant par le biais de l'échangeur primaire dont la sortie d'oxygène de combustion est reliée audit au moins un injecteur de comburant.

Comme indiqué ci-dessus, l'unité de séparation des gaz de l'air comporte de préférence une colonne à distillation cryogénique des gaz de l'air. L'unité de séparation des gaz de l'air peut aussi être un système basé sur la technique dite VSA (Vacuum Swing Adsoprtion).

L'installation comporte avantageusement également un réservoir d'oxygène comme source d'oxygène de combustion lors d'un arrêt ou d'une productivité réduite de l'unité de séparation des gaz de l'air. L'installation peut également de manière utile comporter une source auxiliaire d'énergie mécanique et/ou d'énergie électrique, tel qu'un générateur, pour la fourniture d'énergie mécanique et/ou électrique lors d'un arrêt de la turbine d'expansion.

Comme indiqué précédemment, la combustion peut être le seul moyen de chauffage de la chambre de fusion ou peut être combinée avec d'autres systèmes de chauffage tels que des électrodes.

L'oxygène de combustion (chaud) peut être le seul comburant ou peut être combiné avec d'autres comburants, tels qu'en particulier de l'air. Le combustible gazeux peut être le seul combustible ou peut être combiné avec d'autres combustibles.

Un injecteur de comburant relié à la sortie d'oxygène de combustion de l'échangeur primaire peut faire partie d'un brûleur de la chambre de fusion. Un tel injecteur d'oxygène peut également faire partie d'une lance de comburant de la chambre de fusion et en particulier d'une lance d'oxygène.

De manière analogue, un injecteur de combustible gazeux relié à la sortie de combustible gazeux de l'échangeur primaire peut faire partie d'un brûleur de la chambre de fusion ou peut être intégré dans une lance de combustible de ladite chambre.

Suivant une forme de réalisation préférée, le four de fusion est un four à verre, et en particulier un four à verre de type dit four float (c'est-à-dire un four à bain de flottage, également appelé bain de métal), mais l'invention est également utile pour d'autres fours à fusion, y compris des fours de fusion de métaux tels que par exemple, les métaux non-ferreux.

Bien que la description ci-dessus de l'invention se limite à une forme de réalisation selon laquelle de l'air est utilisé comme gaz caloporteur, selon une variante de l'invention, un autre gaz, tel que par exemple l'azote, peut être utilisé comme gaz caloporteur.

Le gaz caloporteur peut circuler en circuit ouvert ou en circuit fermé. Dans le dernier cas, le gaz obtenu après expansion dans la turbine d'expansion est réutilisé comme gaz caloporteur dans le procédé/installation. Cette forme de réalisation est notamment indiquée quand le gaz caloporteur est un gaz autre que l'air.

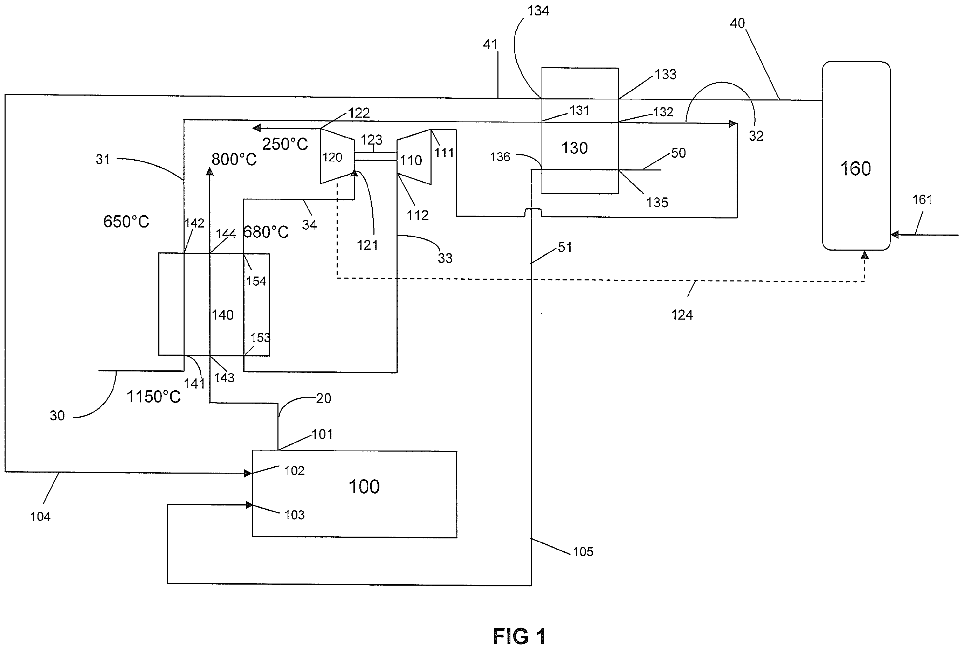

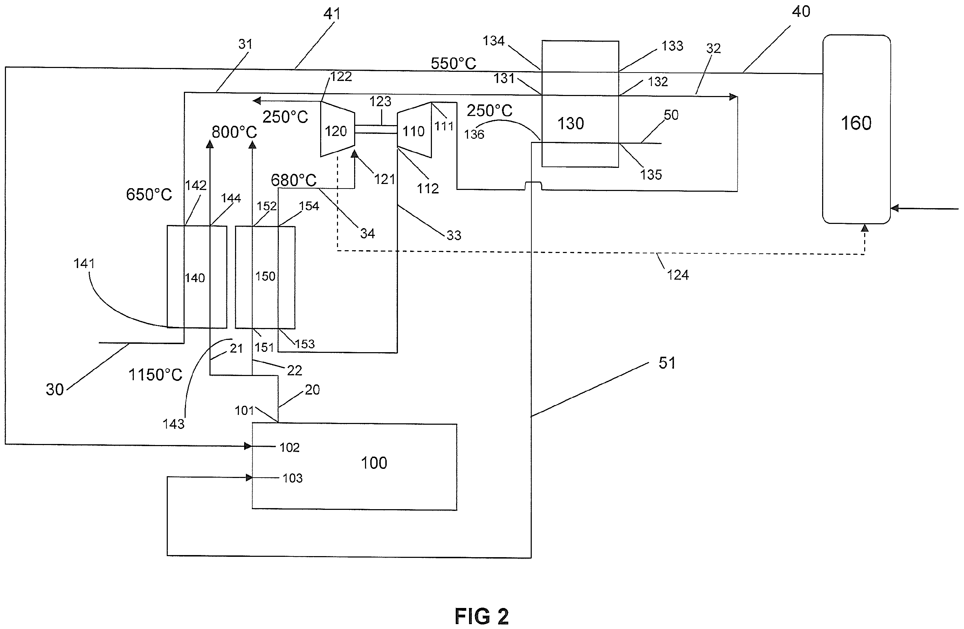

La présente invention et ses avantages sont décrits plus en détail ci-après en se référant aux figures 1 et 2.

Les figures 1 et 2 sont des représentations schématiques de deux exemples d'une installation et d'un procédé suivant l'invention utilisant de l'air comme gaz caloporteur.

Le four de fusion comporte une chambre de fusion 100 à oxy-combustion, chauffé par un nombre d'oxy-brûleurs (non représentés). Lesdits brûleurs sont alimentés en combustible, tel que par exemple le gaz naturel, par le conduit 105 et en oxygène de combustion par le conduit 104.

L'oxygène de combustion est généré par une unité de séparation des gaz de l'air 160 qui sépare de l'air comprimé 161 en un flux d'oxygène 40, ayant une teneur en O₂ d'au moins 90%vol, et un flux (non représenté) consistant principalement de N₂.

Les fumées 20 générées par l'oxy-combustion dans la chambre de fusion 100 sont évacuées de la chambre de combustion par la sortie 101, lesdites fumées 20 ayant une température entre 1000°C et 2000°C, par exemple entre 1250°C et 1750°C.

Lesdites fumées chaudes 20 ou au moins une partie 21 desdites fumées sont amenées vers un premier échangeur de chaleur, dit « échangeur de chaleur secondaire » 140. Les fumées chaudes (20, 21) entrent dans l'échangeur secondaire 140 par une entrée de fumées 143 et sortent par la sortie de fumées 144. A l'intérieur de l'échangeur secondaire 140, les fumées chauffent de l'air 30 par échange thermique.

L'air 30 est introduit dans l'échangeur secondaire 140 par une entrée d'air 141. L'air chauffé 31 sort de l'échangeur secondaire 140 par la sortie d'air 142 à une température entre 600°C et 800°C.

L'air chauffé 31 issu de l'échangeur secondaire 140 est amené vers et introduit dans un deuxième échangeur de chaleur, dit « échangeur primaire » 130 par l'entrée de gaz caloporteur 131.

Un seul échangeur primaire 130 est montré dans les figures. Toutefois, ledit échangeur primaire 130 peut se décomposer en une série de plusieurs sous-échangeurs primaires, c'est-à dire une série d'échangeurs gaz caloporteur/oxygène de combustion et/ou d'échangeurs gaz caloporteur/combustible gazeux.

Un flux d'oxygène 40 issu de l'unité de séparation 160 est introduit dans l'échangeur primaire 130 par l'entrée d'oxygène 133 et sort de l'échangeur primaire en tant qu'oxygène préchauffé 41 par la sortie d'oxygène 134. Un flux de gaz naturel 50 est introduit dans l'échangeur primaire 130 par l'entrée de combustible 135 et sort de l'échangeur primaire 130 en tant que gaz naturel préchauffé 51 par la sortie de combustible 136.

A l'intérieur de l'échangeur primaire 130, le flux d'oxygène 40 est préchauffé à une température entre 350°C et 650°C, par exemple à 550°C, par échange thermique avec l'air chauffé 31 et le flux de gaz naturel 50 est préchauffé à une température entre 250°C et 550°C, par exemple à 450°C, également par échange thermique avec l'air chauffé 31.

L'oxygène ainsi préchauffé 41 est transporté en tant qu'oxygène de combustion vers la chambre de fusion 100 par le conduit 104 et le gaz naturel ainsi préchauffé 51 est transporté en tant que combustible vers la chambre de fusion 100 par le conduit 105.

Après son utilisation pour le préchauffage de l'oxygène et du combustible gazeux, le gaz caloporteur (air) tempéré 32 est évacué de l'échangeur primaire 130 par la sortie d'air 132.

L'air tempéré 32 est amené vers un compresseur d'air 110, dans lequel l'air tempéré est comprimé à une pression entre 10 et 20 atm, par exemple à environ 15 atm, de manière à obtenir de l'air tempéré comprimé 33 à la sortie 112 du compresseur 110.

L'air tempéré comprimé 33 est alors amené vers un échangeur de chaleur pour être chauffé par échange thermique avec des fumées chaudes 20 issues de la chambre de fusion 100.

Dans la forme de réalisation illustrée dans la figure 1, l'air tempéré comprimé 33 est ainsi introduit dans l'échangeur secondaire 140 par l'entrée d'air comprimé 153 et l'air comprimé chauffé 34 obtenu par échange thermique avec les fumées chaudes 20 est évacuées de l'échangeur secondaire 140 par la sortie d'air comprimé chauffé 154.

Dans la forme de réalisation illustrée dans la figure 2, l'air tempéré comprimé 33 est introduit dans un troisième échangeur de chaleur, dit « échangeur tertiaire » 150 par l'entrée d'air comprimé 153. Les fumées chaudes 20 sont divisées en deux fractions 21 et 22. La fraction de fumées chaudes 21 est introduite dans l'échangeur secondaire 140 pour le chauffage de l'air 30 qui est utilisé comme gaz caloporteur. La fraction de fumées chaudes 22 est introduite dans l'échangeur tertiaire 150 par l'entrée de fumées chaudes 151 pour le chauffage de l'air tempéré comprimé 33 obtenu par compression dans le compresseur 110 de l'air tempéré issu de l'échangeur primaire. Les fumées tempérées sont évacuées de l'échangeur tertiaire 150 par la sortie de fumées 152 et l'air comprimé chauffé est évacuée par la sortie d'air comprimé 154.

Le réglage de la fraction de fumées chaudes 21 envoyée vers l'échangeur secondaire 140 et de la fraction de fumées chaudes 22 envoyées ver l'échangeur tertiaire 150 en fonction de l'énergie thermique nécessaire pour respectivement le chauffage de l'air 30 utilisé comme gaz caloporteur et le chauffage de l'air comprimé permet d'optimiser la récupération et l'exploitation de l'énergie thermique présente dans les fumées chaudes 20 à la sortie de la chambre de fusion 100.

L'air comprimé chauffé 34 est alors amené vers l'entrée de gaz comprimé 121 d'une turbine d'expansion 120. L'expansion de l'air comprimé chauffé 34 dans cette turbine d'expansion 120 génère de l'énergie mécanique et électrique. Après l'expansion, l'air est évacuée de la turbine d'expansion par la sorti 122.

Dans les cas illustrés, l'énergie obtenue par cette expansion de l'air comprimé chauffé est transmise :
- d'une part au compresseur d'air 34 sous forme d'énergie mécanique par l'arbre de transmission 123, et
- d'autre part à l'unité de séparation 160 sous forme d'énergie électrique par la connexion 124.

### Exemple

La présente invention et ses avantages sont illustrés dans l'exemple comparatif ci-après.

L'exemple suivant l'invention correspond au schéma de la figure 1.

La référence correspond au même schéma, si ce n'est que l'air tempéré 32 issu de l'échangeur de chaleur primaire 130 est directement envoyé dans la cheminée.

Le four est un four de fusion de verre chauffé par oxy-combustion uniquement avec une consommation d'oxygène de 7000 Nm³/h et une production d'environ 620 t/j de verre.

La consommation électrique de l'unité de séparation des gaz de l'air est estimée à 3MWe.

Dans l'échangeur primaire 130, l'oxygène est préchauffé à 550°C et le gaz naturel est préchauffé à 450°C.

Dans l'échangeur secondaire 140, l'air est chauffé à 650°C.

Dans l'exemple suivant l'invention, les gaz de combustion sortent de la chambre de combustion 41 à la température de 1300°C.

Le bilan électrique est défini en prenant la consommation d'énergie pour la compression d'air pour l'alimentation de l'unité de séparation 160, pour l'alimentation de l'échangeur secondaire en gaz caloporteur et pour la compression de l'air tempéré 32 dans le compresseur 110.

Deux scénarios sont à envisager :
- un scénario où le prix de l'électricité est 40 €/MWh
- un scénario où le prix de l'électricité est 140 €/MWh

Le tableau 1 fournit les données économiques issues de ces bilans matière et énergie, pour le scénario 1.

Le ratio d'investissement autorisé est calculé sur la base d'un amortissement sur 4 ans avec une disponibilité de l'équipement de 8600 heures/an.

**Tableau 1 : calcul du coût d'investissement (scénario 1)**

| | Référence | Invention |
|---|---|---|
| Bilan électrique (kWe) | -2991,0 | -2347,9 |
| OPEX (EUR/h) | 209,37 | 164,35 |
| Investissement additionnel (EUR/kWh) | | 2408 |

Pour le scénario 2 où le gaz naturel est à 40€/MWh et l'électricité à 140€/MWh, les données économiques sont présentées en tableau 2 :

**Tableau 2 : calcul du coût d'investissement (scénario 2)**

| | Référence | Invention |
|---|---|---|
| Bilan électrique (kWe) | -2991 | |
| OPEX (EUR/h) | 418,74 | 328,71 |
| Investissement additionnel (EUR/kWh) | | 4816 |

Pour la référence, on observe un bilan électrique de - 2991 kWe. Suivant l'invention, le bilan électrique est réduit à -2347,9 kWe, c'est-à-dire une réduction de plus que 20%. Ceci montre que l'invention présente un intérêt économique réel, en particulier dans des régions à prix d'énergie élevé.

## Revendications

1. Procédé de fusion dans un four comportant une chambre de fusion (100), procédé dans lequel :
• on chauffe la chambre de fusion (100) au moyen de combustion, générant ainsi de l'énergie thermique et des fumées chaudes (20) dans la chambre de fusion (100),
• on évacue les fumées chaudes (20) de la chambre de fusion (100) et on chauffe de l'air (30) comme gaz caloporteur par échange thermique avec des fumées chaudes (20) évacuées de la chambre de fusion (100), avec obtention d'air chaud (31),
• on préchauffe au moins un réactif choisi parmi de l'oxygène (40) et/ou du combustible gazeux (50) par échange thermique avec l'air chaud (31), avec obtention d'au moins un réactif préchauffé (41, 51) et de l'air tempéré (32) et on utilise le au moins un réactif préchauffé (41, 51) comme réactif de combustion pour le chauffage de la chambre de fusion (100),
**caractérisé en ce que**:
• on comprime l'air tempéré (32) dans un premier compresseur d'air (110) de manière à obtenir de l'air tempéré comprimé (33),
• on chauffe l'air tempéré comprimé (33) par échange thermique avec des fumées chaudes (20) de manière à obtenir de l'air comprimé chauffé (34), et
• on génère de l'énergie mécanique et/ou électrique par expansion de l'air comprimé chauffé (34) dans une turbine d'expansion (12).

2. Procédé suivant la revendication 1, dans lequel on préchauffe le au moins un réactif de combustion (40, 50) par échange thermique avec l'air chaud (31) dans un échangeur de chaleur primaire (130) et on chauffe le gaz caloporteur (30) par échange thermique avec des fumées chaudes (20) évacuées de la chambre de fusion (100) dans un échangeur de chaleur secondaire (140).

3. Procédé suivant la revendication 2, dans lequel on chauffe également l'air tempéré comprimé (33) par échange thermique avec des fumées chaudes (20) évacuées de la chambre de fusion (100) dans l'échangeur de chaleur secondaire (140).

4. Procédé suivant la revendication 2, dans lequel on chauffe l'air tempéré comprimé (33) avec des fumées chaudes (20) évacuées de la chambre de fusion (100) dans un échangeur de chaleur tertiaire (150).

5. Procédé suivant l'une quelconque des revendications précédentes, dans lequel l'énergie mécanique et/ou électrique générée par la turbine d'expansion (120) est au moins en partie fournie à un ou plusieurs compresseurs d'air (110).

6. Procédé suivant l'une quelconque des revendications précédentes, dans lequel le four de fusion est un four de fusion de verre, de préférence un four de fusion de verre de type float.

7. Installation de fusion comportant :
• un four définissant une chambre de fusion (100) chauffée par combustion et comportant au moins une sortie de fumées (101) générées par la combustion,
• un échangeur de chaleur primaire (130) pour le préchauffage, de l'oxygène de combustion (40) et/ou de combustible gazeux (50) en amont de la chambre de fusion (100) par échange thermique avec de l'air (31) comme gaz caloporteur, ledit échangeur primaire (130) présentant (a) une entrée (131) et une sortie (132) de gaz caloporteur et (b) une entrée (133) et une sortie (134) d'oxygène de combustion et/ou une entrée (135) et une sortie (136) de combustible gazeux,
• un échangeur de chaleur secondaire (140) pour le chauffage d'air (30) par échange thermique avec les fumées (20) issues de la chambre de fusion (100), ledit échangeur secondaire (140) présentant (a) une entrée (141) et une sortie (142) d'air et (b) une entrée (143) et une sortie (144) de fumées,
installation dans laquelle :
• l'entrée de fumées (143) de l'échangeur secondaire (140) est reliée à une sortie de fumées (101) de la chambre de fusion (100),
• la sortie d'oxygène de combustion (134) de l'échangeur primaire (130) est reliée à au moins un injecteur de comburant (102) de la chambre de fusion (100) et/ou la sortie de combustible gazeux (136) de l'échangeur primaire (130) est reliée à au moins un injecteur de combustible (103) de la chambre de fusion (100),
et **caractérisée en ce que**:
• la sortie d'air (132) de l'échangeur de chaleur primaire (130) est reliée à une entrée d'air (111) d'un premier compresseur d'air (110), ledit premier compresseur d'air (110) ayant une sortie d'air comprimé (112) reliée à une entrée d'air comprimé (143, 153) d'un échangeur de chaleur (140, 150) pour le chauffage d'air comprimé (33) par échange thermique avec des fumées (20) générées par la combustion dans la chambre de fusion (100), ledit échangeur de chaleur ayant une sortie (146, 153) d'air comprimé chauffé (34), ladite sortie d'air chauffé (34) étant reliée à une entrée (122) de gaz comprimé d'une turbine d'expansion (120) pour la génération d'énergie mécanique et/ou électrique par l'expansion de l'air comprimé chauffé (34) dans la turbine d'expansion (120).

8. installation suivant la revendication 7, dans laquelle l'échangeur de chaleur secondaire (140) est également utilisé comme l'échangeur de chaleur pour le chauffage d'air comprimé.

9. Installation suivant la revendication 7, dans laquelle un troisième échangeur de chaleur, dit échangeur de chaleur tertiaire, est utilisé comme échangeur de chaleur pour le chauffage d'air comprimé (33).

10. Installation suivant l'une quelconque des revendications 7 à 9, dans laquelle la turbine d'expansion (120) fournit de l'énergie mécanique et/ou électrique à au moins un compresseur d'air (110).

11. Installation suivant la revendication 10, dans laquelle la turbine d'expansion (120) fournit de l'énergie mécanique et/ou électrique à au moins un compresseur d'air choisi parmi : le premier compresseur d'air (120), un second compresseur d'air qui alimente une unité de séparation des gaz de l'air (110) et un autre compresseur d'air.

12. Installation suivant la revendication 7 à 11, dans laquelle la turbine d'expansion (120) fournit de l'énergie mécanique ou électrique à une unité de séparation des gaz de l'air (160) et/ou un compresseur d'air d'une unité de séparation des gaz de l'air (160), ladite unité de séparation des gaz de l'air présentant une sortie d'oxygène reliée à l'entrée d'oxygène de combustion (133) de l'échangeur primaire (130).

13. Installation suivant l'une quelconque des revendications 7 à 12, dans laquelle :
• la sortie d'oxygène de combustion (134) de l'échangeur primaire (130) est reliée à au moins un injecteur de comburant (102) intégré dans un brûleur de la chambre de fusion (100) et/ou la sortie de combustible gazeux (136) de l'échangeur primaire (130) est reliée à au moins un injecteur de combustible (103) intégré dans un brûleur de la chambre de fusion (100) ;
et/ou dans laquelle
• la sortie d'oxygène de combustion (134) de l'échangeur primaire (130) est reliée à au moins un injecteur de comburant (102) intégré dans une lance de comburant de la chambre de fusion (100) et/ou la sortie de combustible gazeux (136) de l'échangeur primaire (130) est reliée à au moins un injecteur de combustible (103) intégré dans une lance de combustible de la chambre de fusion (100).

14. Installation suivant l'une quelconque des revendications 7 à 13, dans laquelle le four de fusion est un four à verre, de préférence un four à verre de type float.

15. Utilisation d'une installation suivant l'une quelconque des revendications 7 à 14 dans un procédé suivant la revendication 1.

## Patentansprüche

1. Verfahren zum Schmelzen in einem Ofen, eine Schmelzkammer (100) umfassend, wobei man bei dem Verfahren:
- die Schmelzkammer (100) mittels Verbrennung erhitzt, wodurch in der Schmelzkammer (100) Wärmeenergie und heiße Rauchgase (20) entstehen,
- die heißen Rauchgase (20) aus der Schmelzkammer (100) abführt, und man Luft (30) als Wärmeträgergas durch Wärmetausch mit den heißen Rauchgasen (20) erhitzt, die aus der Schmelzkammer (100) abgeführt werden, mit dem Erhalt von heißer Luft (31),
- zumindest ein Reagenz, das aus Sauerstoff (40) und/ oder gasförmigem Brennstoff (50) ausgewählt wird, durch Wärmetausch mit der heißen Luft (31) vorwärmt, mit dem Erhalt von zumindest einem vorgewärmten Reagenz (41, 51) und temperierter Luft (32), und man das zumindest eine vorgewärmte Reagenz (41, 51) als Verbrennungsreagenz zum Erhitzen der Schmelzkammer (100) verwendet, **dadurch gekennzeichnet, dass**:
- man die temperierte Luft (32) in einem ersten Luftverdichter (110) verdichtet, um temperierte Druckluft (33) zu erhalten,
- man die temperierte Druckluft (33) durch Wärmetausch mit den heißen Rauchgasen (20) erhitzt, um erhitzte Druckluft (34) zu erhalten, und
- man mechanische und/ oder elektrische Energie durch Expansion der erhitzten Druckluft (34) in einer Expansionsturbine (12) erzeugt.

2. Verfahren nach Anspruch 1, wobei man das zumindest eine Verbrennungsreagenz (40, 50) durch Wärmetausch mit der heißen Luft (31) in einem Primärwärmetauscher (130) vorwärmt und man das Wärmeträgergas (30) durch Wärmetausch mit den heißen Rauchgasen (20), die aus der Schmelzkammer (100) abgeführt werden, in einem Sekundärwärmetauscher (140) erhitzt.

3. Verfahren nach Anspruch 2, wobei man auch die temperierte Druckluft (33) durch Wärmetausch mit den heißen Rauchgasen (20), die aus der Schmelzkammer (100) abgeführt werden, im Sekundärwärmetauscher (140) erhitzt.

4. Verfahren nach Anspruch 2, wobei man die temperierte Druckluft (33) mit den heißen Rauchgasen (20), die aus der Schmelzkammer (100) abgeführt werden, in einem Tertiärwärmetauscher (150) erhitzt.

5. Verfahren nach einem der vorherigen Ansprüche, wobei die mechanische und/ oder elektrische Energie, die von der Expansionsturbine (120) erzeugt wird, zumindest teilweise in einen oder mehrere Luftverdichter (110) geliefert wird.

6. Verfahren nach einem der vorherigen Ansprüche, wobei der Schmelzofen ein Glasschmelzofen, vorzugsweise ein Floatglas-Schmelzofen, ist.

7. Schmelzanlage, Folgendes umfassend:
- einen Ofen, der eine Schmelzkammer (100) definiert, die durch Verbrennung erhitzt wird, und zumindest einen Auslass für Rauchgase (101) umfasst, die durch die Verbrennung entstehen,
- einen Primärwärmetauscher (130) zum Vorwärmen des Verbrennungssauerstoffs (40) und/ oder des gasförmigen Brennstoffes (50) vor der Schmelzkammer (100) durch Wärmetausch mit Luft (31) als Wärmeträgergas, wobei der Primärwärmetauscher (130) (a) einen Eingang (131) und einen Ausgang (132) für das Wärmeträgergas und (b) einen Eingang (133) und einen Ausgang (134) für Verbrennungssauerstoff und/ oder einen Eingang (135) und einen Ausgang (136) für gasförmigen Brennstoff aufweist,
- einen Sekundärwärmetauscher (140) zum Erhitzen von Luft (30) durch Wärmetausch mit den Rauchgasen (20) aus der Schmelzkammer (100), wobei der Sekundärwärmetauscher (140) (a) einen Eingang (141) und einen Ausgang (142) für Luft und (b) einen Eingang (143) und einen Ausgang (144) für Rauchgase aufweist,
Anlage, in der:
- der Eingang für Rauchgase (143) des Sekundärwärmetauschers (140) mit einem Ausgang für Rauchgase (101) der Schmelzkammer (100) verbunden ist,
- der Ausgang für Verbrennungssauerstoff (134) des Primärwärmetauschers (130) mit zumindest einem Injektor für Oxidationsmittel (102) der Schmelzkammer (100) verbunden ist, und/ oder der Ausgang für gasförmigen Brennstoff (136) des Primärwärmetauschers (130) mit zumindest einem Injektor für Brennstoff (103) der Schmelzkammer (100) verbunden ist,
und **dadurch gekennzeichnet, dass**:
- der Ausgang für Luft (132) des Primärwärmetauschers (130) mit einem Eingang für Luft (111) eines ersten Luftverdichters (110) verbunden ist, wobei der erste Luftverdichter (110) einen Ausgang für Druckluft (112) aufweist, der mit einem Eingang für Druckluft (143, 153) eines Wärmetauschers (140, 150) zum Erhitzen von Druckluft (33) durch Wärmetausch mit den Rauchgasen (20) verbunden ist, die durch die Verbrennung in der Schmelzkammer (100) entstehen, wobei der Wärmetauscher einen Ausgang (146, 153) für erhitzte Druckluft (34) aufweist, wobei der Ausgang für erhitzte Druckluft (34) mit einem Eingang (122) für unter Druck stehendes Gas einer Expansionsturbine (120) zum Erzeugen von mechanischer und/ oder elektrischer Energie durch Expansion der erhitzten Druckluft (34) in der Expansionsturbine (120) verbunden ist.

8. Anlage nach Anspruch 7, wobei der Sekundärwärmetauscher (140) auch als Wärmetauscher zum Erhitzen von Druckluft verwendet wird.

9. Anlage nach Anspruch 7, wobei ein dritter Wärmetauscher, der Tertiärwärmetauscher genannt wird, als Wärmetauscher zum Erhitzen von Druckluft (33) verwendet wird.

10. Anlage nach einem der Ansprüche 7 bis 9, wobei die Expansionsturbine (120) zumindest einem Luftverdichter (110) mechanische und/ oder elektrische Energie liefert.

11. Anlage nach Anspruch 10, wobei die Expansionsturbine (120) zumindest einem Luftverdichter mechanische und/ oder elektrische Energie liefert, der aus den Folgenden ausgewählt wird: dem ersten Luftverdichter (120), einem zweiten Luftverdichter, der eine Einheit zur Luftzerlegung (110) versorgt und einem weiteren Luftverdichter.

12. Anlage nach Anspruch 7 bis 11, wobei die Expansionsturbine (120) einer Einheit zur Luftzerlegung (160) und/ oder einem Luftverdichter einer Einheit zur Luftzerlegung (160) mechanische oder elektrische Energie liefert, wobei die Einheit zur Luftzerlegung einen Ausgang für Sauerstoff aufweist, der mit dem Eingang für Verbrennungssauerstoff (133) des Primärwärmetauschers (130) verbunden ist.

13. Anlage nach einem der Ansprüche 7 bis 12, wobei:
- der Ausgang für Verbrennungssauerstoff (134) des Primärtauschers (130) mit zumindest einem Injektor für Oxidationsmittel (102) verbunden ist, der in einen Brenner der Schmelzkammer (100) integriert ist, und/ oder der Ausgang für gasförmigen Brennstoff des Primärtauschers (136) des Primärtauschers (130) mit zumindest einem Injektor für Brennstoff (103) verbunden ist, der in einen Brenner der Schmelzkammer (100) integriert ist;
und/ oder wobei
- der Ausgang für Verbrennungssauerstoff (134) des Primärtauschers (130) mit zumindest einem Injektor für Oxidationsmittel (102) verbunden ist, der in eine Oxidationsmittellanze der Schmelzkammer (100) integriert ist, und/ oder der Ausgang für gasförmigen Brennstoff (136) des Primärtauschers (130) mit zumindest einem Injektor für Brennstoff (103) verbunden ist, der in eine Brennstofflanze der Schmelzkammer (100) integriert ist.

14. Anlage nach einem der Ansprüche 7 bis 13, wobei der Schmelzofen ein Glasschmelzofen, vorzugsweise ein Floatglas-Schmelzofen, ist.

15. Verwendung einer Anlage nach einem der Ansprüche 7 bis 14 in einem Verfahren nach Anspruch 1.

## Claims

1. Method for melting in a furnace comprising a melting chamber (100), method wherein:
- the melting chamber (100) is heated by means of combustion, thereby generating thermal energy and hot fumes (20) in the melting chamber (100),
- the hot fumes (20) are evacuated from the melting chamber (100) and air (30) is heated as a heat transfer gas by heat exchange with hot fumes (20) removed from the melting chamber (100), thereby obtaining hot air (31),
- at least one combustion reagent chosen from oxygen (40) and/or the gaseous fuel (50) is preheated by heat exchange with a the hot air (31), thereby obtaining at least one preheated reagent (41, 51) and tempered air (32) and the at least one preheated reagent (41, 51) is used as a combustion reagent for the heating of the melting chamber (100),
**characterised in that**:
- the tempered air (32) is compressed in a first air compressor (110) so as to obtain compressed tempered air (33),
- the compressed tempered air (33) is heated by heat exchange with hot fumes (20) so as to obtain heated compressed air (34), and
- mechanical and/or electrical energy is generated by expansion of the heated compressed air (34) in an expansion turbine (12).

2. Method according to claim 1, wherein the at least one combustion reagent (40, 50) is preheated by heat exchange with the hot air (31) in a primary heat exchanger (130) and the heat transfer gas (30) is heated by heat exchange with hot fumes (20) removed from the melting chamber (100) in a secondary heat exchanger (140).

3. Method according to claim 2, wherein the compressed tempered air (33) is also heated by heat exchange with hot fumes (20) removed from the melting chamber (100) in the secondary heat exchanger (140).

4. Method according to claim 2, wherein the compressed tempered air (33) is heated by heat exchange with hot fumes (20) removed from the melting chamber (100) in the tertiary heat exchanger (150).

5. Method according to any of the preceding claims, wherein the mechanical and/or electrical energy generated by the expansion turbine (120) is at least partially supplied by one or several air compressors (110).

6. Method according to any of the preceding claims, wherein the melting furnace is a glass furnace, preferably a glass furnace of the float type.

7. Installation for melting comprising:
- a furnace defining a melting chamber (100) heated via combustion and comprising at least one outlet of fumes (101) generated by the combustion,
- a primary heat exchanger (130) for the preheating of combustion oxygen (40) and/or of gaseous fuel (50) upstream of the melting chamber (100) by heat exchange with air (31) as a heat transfer gas, said primary exchanger (130) having (a) an inlet (131) and an outlet (132) of heat transfer gas and (b) an inlet (133) and an outlet (134) of combustion oxygen and/or an inlet (135) and an outlet (136) of gaseous fuel,
- a secondary heat exchanger (140) for the heating of compressed air (30) by heat exchange with the fumes (20) coming from the melting chamber (100), said secondary exchanger (140) having (a) an inlet (141) and an outlet (142) of air and (b) an inlet (143) and an outlet (144) of fumes,
installation wherein:
- the fume inlet (143) of the secondary exchanger (140) is connected to a fume outlet (101) of the melting chamber (100),
- the combustion oxygen outlet (134) of the primary exchanger (130) is connected to at least one oxidant injector (102) of the melting chamber (100) and/or the outlet of gaseous fuel (136) of the primary exchanger (130) is connected to at least one fuel injector (103) of the melting chamber (100),
and **characterised in that**:
- the air outlet (132) of the primary exchanger (130) is connected to the air intake (111) of a first air compressor (110), said first air compressor (110) having a compressed air outlet (112) connected to a compressed air inlet (143, 153) of a heat exchanger (140,150) for the heating of compressed air (33) by heat exchange with fumes (20) generated by the combustion in the melting chamber (100), said heat exchanger having an outlet (146, 153) of heated compressed air (34), said heated air (34) outlet being connected to an inlet (122) of compressed gas of an expansion turbine (120) for the generation of mechanical and/or electrical energy by the expansion of the heated compressed air (34) in the expansion turbine (120).

8. Installation according to claim 7, wherein the secondary heat exchanger (140) is also used as the heat exchanger for the heating of compressed air.

9. Installation according to claim 7, wherein a third heat exchanger, referred to as tertiary heat exchanger, is used as the heat exchanger for the heating of compressed air (33).

10. Installation according to any of claims 7 to 9, wherein the expansion turbine (120) supplies mechanical and/or electrical energy to at least one air compressor (110).

11. Installation according to claim 10, wherein the expansion turbine (120) supplies mechanical and/or electrical energy to at least one air compressor chosen from:
the first air compressor (120), a second air compressor that supplies an air separation unit (110) and another air compressor.

12. Installation according to claims 7 to 11, wherein the expansion turbine (120) supplies mechanical or electrical energy to an air separation unit (160) and/or an air compressor of an air separation unit (160), said unit for separating gases from the air having an oxygen outlet connected to the combustion oxygen inlet (133) of the primary exchanger (130).

13. Installation according to any of claims 7 to 12, wherein:
- the combustion oxygen outlet (134) of the primary exchanger (130) is connected to at least one oxidant injector (102) integrated into a burner of the melting chamber (100) and/or the outlet of gaseous fuel of the primary exchanger (136) of the primary exchanger (130) is connected to at least one fuel injector (103) integrated into a burner of the melting chamber (100);
and/or wherein
- the combustion oxygen outlet (134) of the primary exchanger (130) is connected to at least one oxidant injector (102) integrated into an oxidant lance of the melting chamber (100) and/or the outlet of gaseous fuel (136) of the primary exchanger (130) is connected to at least one fuel injector (103) integrated into a fuel lance of the melting chamber (100).

14. Installation according to any of claims 7 to 13, wherein the melting furnace is a glass furnace, preferably a glass furnace of the float type.

15. Use of an installation according to any of claims 7 to 14 in a method according to claim 1.
